# EUROPÄISCHE PATENTSCHRIFT

(11) **EP 1 328 735 B1**
(45) Veröffentlichungstag und Bekanntmachung des Hinweises auf die Patenterteilung: **06.01.2010**
(21) Anmeldenummer: 01972049.9
(22) Anmeldetag: 12.09.2001
(51) Int. Cl.: F16D 1/09

(54) **SPANNVORRICHTUNG**
CLAMPING MECHANISM
DISPOSITIF DE FIXATION

(30) Priorität: 16.10.2000 DE 10051275; 01.12.2000 DE 10060037
(43) Veröffentlichungstag der Anmeldung: 23.07.2003
(73) Patentinhaber: SEW-Eurodrive GmbH & Co, D-76646 Bruchsal (DE)
(72) Erfinder: ZIMMERMANN, Heinrich, 76646 BRUCHSAL (DE); HÄCKER, Uwe, 76356 WEINGARTEN (DE); SANDER, Joachim, 76698 UBSTADT-WEIHER (DE); RICHERT, René, F-67160 RIEDSELZ (FR)
(86) Internationale Anmeldenummer: PCT/EP2001/010520
(87) Internationale Veröffentlichungsnummer: WO 2002/033277

(56) Entgegenhaltungen:
- CH-A- 265 280
- DE-A- 3 744 285
- DE-A- 4 141 266
- DE-U- 1 784 994
- DE-U- 20 009 845
- US-A- 5 496 127

## Beschreibung

Die Erfindung betrifft eine Spannvorrichtung.

Aus der DE 4230941 C2 ist eine Spannvorrichtung für die Verbindung eines Hohlteiles mit einer Vollwelle bekannt. Dabei wird ein spielfreies Einpassen einer Vollwelle in das Hohlteil gezeigt, wobei zwei Konusringe gegeneinander gepresst werden. Das Kraftaufnahmeteil (DE 4230941 C2, Figur, Bezugszeichen 19) hält die durch dieses Gegeneinanderpressen bewirkten Ausdehnungen und Verformungen des Hohlteils und erniedrigt somit die Elastizität des Hohlteils.

Weiter ist von Nachteil, dass die Anzahl der Teile hoch ist und das Fertigen von dem Hohlteil und insbesondere zwei Konus-aufweisenden Teilen (27, 32) kostspielig ist. Außerdem wird bei der Montage des Spannsatzes die Vollwelle gedrückt und die Spannkraft oder Schrumpfkraft durch Bewegen des Ringes
(DE 4230941 C2 , Figur, Bezugszeichen 33) und des nach innen gerichteten Flansches
(DE 4230941 C2 , Figur, Bezugszeichen 34) erzeugt. Dabei wird das Hohlteil axial verschoben relativ zur Vollwelle. Dies ist ein erheblicher Nachteil, wenn das Hohlteil in einem Getriebe oder einer anderen Vorrichtung eingesetzt ist und in seiner axialen Lage von entsprechenden Komponenten, beispielsweise von Sicherungsringen, gehalten wird. Es werden dann erhebliche Kräfte erzeugt, welche die Lager belasten und zu deren Ausfall führen können.

Außerdem weist das Hohlteil im Bereich des Kraftaufnahmeteils (DE 4230941 C2 , Figur, Bezugszeichen 19) einen stufenförmigen Verlauf des Innendurchmessers auf, der zu einer Kerbwirkung führt und daher eine mögliche Sollbruchstelle darstellt.

Weiterer Nachteil ist, dass beim Abziehen oder bei Demontage die Schrauben (DE 4230941 C2 , Figur, Bezugszeichen 21) herausgeschraubt werden müssen und andere Schrauben mit größerem Gewinde eingeschraubt werden müssen. Solche anderen Schrauben vorrätig zu halten, ist also notwendig bei der Demontage. Dies ist aufwendig und kostspielig. Außerdem muss bei Demontage der Spannring (DE 4230941 C2 , Figur, Bezugszeichen 33) gedreht werden, um den anderen Schrauben eine Gegenfläche auf dem Kraftaufnahmeteil (DE 4230941 C2 , Figur, Bezugszeichen 19) zu bieten. Dieses Drehen ist mühsam, insbesondere wenn Korrosion oder Veränderungen, wie Verkleben oder dergleichen, während der Standzeit erfolgt sind.

Aus der DE 200 09 845 U1 ist eine Kopplungsvorrichtung, umfassend eine Welle, ein Hohlteil und ein zwischen Welle und Hohlteil angeordnetes, einen konischen Bereich aufweisendes Rohrstück, bekannt. Allerdings trägt die dortige Welle eine Verzahnung und Ist mittels dieser mit dem Rohrstück formschlüssig verbunden.

Aus der DE 41 41 266 A1 ist eine Spannvorrichtung mit Schrumpfscheibe bekannt, mit der ein konisch verlaufender Wellenabschnitt auf einen entsprechend ausgeformten Vollwellenabschnitt aufgeschrumpft ist, also kraftschlüssig gehalten ist.

Der Erfindung liegt daher die Aufgabe zugrunde, eine möglichst kostengünstige und einfach zu handhabende Spannvorrichtung zu schaffen.

Erfindungsgemäß wird die Aufgabe bei der Spannvorrichtung zur Befestigung einer Hohlwelle oder eines Hohlteiles auf einer Vollwelle nach den in Anspruch 1 angegebenen Merkmalen gelöst.

Wesentliche Merkmale der Erfindung bei der Spannvorrichtung sind, dass die Hohlwelle oder das Hohlteil an zumindest einem ihrer Enden einen Innenkonus zur Aufnahme einer aufweist, die einen entsprechenden Außenkonus aufweist und auf der Vollwelle liegt, wobei an zumindest dem einen Ende eine Schrumpfscheibe, umfassend mindestens einen Pressring, auf der Hohlwelle oder auf dem Hohlteil vorgesehen ist zur Ausübung einer Schrumpfkraft

Wesentlicher Vorteil ist bei der Erfindung, dass beim Befestigen oder Anziehen der Spannvorrichtung die relative Lage zu der zu verbindenden Komponente möglichst genau einhaltbar ist. Weiter vorteilhaft ist bei der Erfindung, dass das zu spannende Hohlteil auch auf grob tolerierten und/oder im Nenndurchmesser unterschiedlichen Vollwellen zuverlässig radial verspannbar ist unter Verwendung einer einfachen und kostengünstigen Konstruktion, die mit möglichst vielen Standard- Bauteilen auskommt und nur eine kleine Einbaulänge benötigt.

Von Vorteil ist insbesondere auch, dass ein spielfreies Einpassen ausführbar ist in kostengünstiger Weise mit wenigen Teilen, insbesondere kostengünstige Standard-Teile. Weiterer Vorteil ist dabei, dass die Hohlwelle einen Innenkonus aufweist, weshalb keine stufigen Verläufe ausgeführt werden müssen und Kerbwirkung vermindert oder sogar ganz vermeidbar ist. Außerdem macht der Innenkonus die Hohlwelle elastisch und genügend gut verformbar, um die geometrischen Änderungen weiterzuleiten.

Insbesondere weist die Hohlwelle oder das Hohlteil an beiden Enden jeweils einen Innenkonus zur Aufnahme einer jeweiligen Adapterbuchse auf, die einen entsprechenden Außenkonus aufweist und auf der Vollwelle liegt, wobei an dem anderen Ende ein Klemmring vorgesehen ist zur axialen Fixierung der entsprechenden Adapterbuchse. Dieser Klemmring ist vorteiligerweise sehr kompakt und kostengünstig herstellbar und weist axial nur eine geringe Baulänge auf. Außerdem genügt ein solcher, an der zugehörigen Adapterbuchse vorgesehener Klemmring, da dieser nur den nötigen Halt zur axialen Fixierung der Adapterbuchse erzeugen muss. Die Drehmoment- und/oder Kraftübertragung zwischen Hohlteil und Vollwelle ist durch die andere Adapterbuchse mit der zugehörigen Schrumpfscheibe vorgesehen. Wesentlicher Vorteil bei dieser Lösung mit Klemmring ist darüber hinaus auch, dass eine zylindrische Vollwelle verwendbar ist, die insbesondere wegen des geringen Bearbeitungsaufwandes kostengünstiger herstellbar ist als eine Vollwelle mit Anschlag, also nicht-konstantem Durchmesser. Es ist also kein an einem Ende vorzusehender Anschlag oder Bund notwendig. Vorteiligerweise kann der Kunde auf der zylindrischen Vollwelle die Hohlwelle samt Klemmring und Schrumpfscheibe axial auf die optimale Position verschieben. Insbesondere kann ein Kunde auch einen zylindrischen Teilabschnitt seiner vorhandenen Vollwelle nutzen und die axiale Lage der Hohlwelle unabhängig von irgendeiner Position eines Bundes auf der Vollwelle bestimmen.

Bei einer weiteren vorteilhaften Ausgestaltung wirkt die Schrumpfkraft derartig, dass der Innenkonus und der Außenkonus aufeinander geschrumpft werden.

Bei einer vorteilhaften Ausgestaltung weist die Adapterbuchse einen axialen Längsschlitz auf und die Schrumpfscheibe, umfassend mindestens einen Pressring, übt eine Schrumpfkraft mittels des mindestens einen Pressrings auf die Hohlwelle oder das Hohlteil aus und der Pressring weist einen axialen Längsschlitz auf.

Bei einer vorteilhaften Ausgestaltung weist die Hohlwelle keinen Schlitz auf. Von Vorteil ist dabei, dass die Hohlwelle kostengünstig fertigbar ist.

Bei einer vorteilhaften Ausgestaltung sind die Innenkonus der Vollwelle durch Schleifen bearbeitet. Von Vorteil ist dabei, dass besonders gutes Einpassen ermöglicht ist.

Bei einer vorteilhaften Ausgestaltung umfasst die Schrumpfscheibe mindestens einen Pressring, mindestens eine Abstützscheibe, mindestens eine Anziehscheibe und mindestens Schrauben. Von Vorteil ist dabei, dass eine Standard-Schrumpfscheibe mit Standard-Bauteilen verwendbar ist.

Bei einer vorteilhaften Ausgestaltung befindet sich die Schrumpfscheibe und/oder die Abstützscheibe und/oder die Anziehscheibe axial innerhalb der Hohlwelle. Von Vorteil ist dabei, dass die Einbaulänge äußerst gering ist.

Bei einer vorteilhaften Ausgestaltung weist die Adapterbuchse einen derart geformten Kragen auf, dass bei Demontage ein Herausziehen mittels der Abziehscheibe ausführbar ist. Von Vorteil ist dabei, dass eine sehr einfache und schnelle Demontage ohne besonderen Hilfsmittel ausführbar ist.

Bei einer vorteilhaften Ausgestaltung weist die Abziehscheibe Schraublöcher für die Schrauben beim Anziehen der Schrumpfscheibe, insbesondere bei Montage, und weitere Schraublöcher auf für die Demontage, das Lösen der Schrumpfscheibe und/oder das Abziehen mindestens der Adapterbuchse. Von Vorteil ist dabei, dass keine weiteren Schrauben notwendig sind und ein Drehen der Abziehscheibe bei Demontage nicht notwendig ist.

Bei einer vorteilhaften Ausgestaltung weist die Vollwelle einen Anschlag zur Begrenzung der axialen Position einer weiteren Adapterbuchse auf. Von Vorteil ist dabei, dass in einfacher Weise die Vollwelle mit zwei gleichartigen Adapterbuchsen einpassbar ist.

Bei einer vorteilhaften Ausgestaltung weist die weitere Adapterbuchse einen Außenkonus und/oder einen Kragen auf. Von Vorteil ist dabei, der Kragen zum Abziehen verwendbar ist und somit weitere Teile oder der Einsatz weiterer Werkzeuge entfallen. Außerdem ist der Außenkonus ein einfach zu fertigendes Mittel zur Erzeugung des Einpassens.

Weiterer Vorteil ist, dass beim Abziehen dieselben Schrauben einsetzbar sind wie beim Anziehen, also bei Montage und Demontage dieselben Schrauben einsetzbar sind. Außerdem ist dabei kein Drehen notwendig, weil schon entsprechend positionierte Schraublöcher vorhanden sind.

Bei einer anderen vorteilhaften Ausgestaltung ist an einem Ende der Hohlwelle eine Stützscheibe anbringbar, die mittels einer Anziehschraube mit der Vollwelle lösbar verbindbar ist. Somit ist ein axiales Zentrieren und eine Vorspannung der Hohlwelle zur Vollwelle vorteiligerweise bewirkbar.

Bei einer weiteren vorteilhaften Ausgestaltung ist der Konuswinkel des Außenkonus der Adapterbuchse derart gewählt, dass die Adapterbuchse nicht selbsthemmend ist. Bei dieser Ausgestaltung bewirkt die Stützscheibe mit der Anziehschraube zusätzlich eine mechanische Verriegelung. Somit sind vorteiligerweise auch solche Konuswinkel verwendbar, die ein noch leichteres Demontieren ermöglichen.

Bei einer weiteren vorteilhaften Ausgestaltung ist der Konuswinkel des Außenkonus der Adapterbuchse derart gewählt, dass die Adapterbuchse selbsthemmend ist. Vorteilhaft ist dabei, dass weitere Komponenten zur mechanischen Verriegelung oder dergleichen nicht notwendig sind und somit einfache und kostengünstige Ausführungen ermöglicht sind.

Weitere Vorteile ergeben sich aus den Unteransprüchen.

### Bezugszeichenliste

- 1: VOLLWELLE
- 2: GEHÄUSE
- 3: HOHLWELLE
- 4: ADAPTERBUCHSE (Geschlitzt)
- 5: PRESSRING DER SCHRUMPFSCHEIBE (Geschlitzt)
- 6: ABSCHTÜTZSCHEIBE DER SCHRUMPFSCHEIBE
- 7: ANZIEHSCHEIBE DER SCHRUMPFSCHEIBE
- 8: SCHRAUBEN
- 9: SICHERUNGSRING
- 10: STÜTZSCHEIBE
- 11: ADAPTERBUCHSE (Geschlitzt)
- 12: WELLENDICHTRING
- 13: DICHTRINGFLANSCH
- 14: LAGER DER HOHLWELLE
- 15: RAD
- 16: LAGER DER HOHLWELLE
- 17: DICHTRINGFLANSCH
- 18: WELLENDICHTRING
- 19: SCHRAUBLÖCHER mit Schraubbohrung
- 20: SCHRAUBLÖCHER mit Schraubgewindebohrung
- 21: AXIALER LÄNGSSCHLITZ der Adapterbuchse
- 22: ANSCHLAG
- 23: AXIALER LÄNGSSCHLITZ des Pressrings
- 24: STÜTZSCHEIBE
- 25: ANZIEHSCHRAUBE
- 26: KLEMMRING
- 26.A: KLEMMRING Kontaktfläche
- 26.B: KLEMMRING Zentrierpressbohrung
- 26.C: KLEMMRING axialer Längsschlitz
- 27: ADAPTERBUCHSE
- 27.A: ADAPTERBUCHSE Zentrierkonus
- 27.B: ADAPTERBUCHSE Außenzentriersitz
- 27.C: ADAPTERBUCHSE Schlitz
- 28: ANZUGSCHRAUBE Klemmring

### Die Erfindung wird nun anhand von Abbildungen näher erläutert:

In der Figur 1 ist eine erfindungsgemäße Spannvorrichtung in Draufsicht und Schnittansicht gezeichnet.

Im Gehäuse 2 ist eine Hohlwelle 3 mittels Lagern 14, 16 gelagert. Das Gehäuse ist zum Abdichten jeweils mit Dichtringflansch 13, 17 und Wellendichtring 12, 18 ausgeführt.

Auf der Hohlwelle 3 ist das Rad 15 angeordnet. Innerhalb der Hohlwelle 3 ist die Vollwelle 1 angeordnet. Bei der Montage wird die Vollwelle 1 in die Hohlwelle 3 eingeführt.

Die Hohlwelle 3 ist an ihrem einen Ende mit einem Innenkonus zur Aufnahme einer Adapterbuchse 4 ausgeführt. An einer weiteren Stelle weist die Vollwelle 1 einen Anschlag 22 auf um die axiale Position einer weiteren Adapterbuchse 11 zu begrenzen. Die Hohlwelle 3 weist einen Innenkonus auf zur Aufnahme der Adapterbuchse 11. Die Innenkonus sind jeweils geschliffen und derart geometrisch ausgelegt, dass Adapterbuchsen 4, 11 mit Außenkonus zwischen Vollwelle 1 und Hohlwelle 3 einbringbar sind.

Mit einer Schrumpfscheibe, die einen Pressring 5, eine Abstützscheibe 6, eine Anziehscheibe 7 und Schrauben 8 umfasst, wird das schrumpfscheibenseitige Ende der Hohlwelle 3 auf die Adapterbuchse 4 derart aufgeschrumpft, dass die Adapterbuchse auf die Vollwelle 1 schrumpft und drückt.

Um die auftretenden elastischen Verformungen leicht weiterleiten zu können, weist die Adapterbuchse 4 einen axialen Längsschlitz 21 auf. Die Adapterbuchse 4 zieht sich also in Umfangsrichtung zusammen und presst sich radial auf die Vollwelle 1. Somit ist ein spielfreies Einpassen kraftschlüssig erreicht.

Die Adapterbuchse 11 weist ebenfalls einen axialen Schlitz auf. Somit ist gewährleistet, dass schon bei geringen Axialkräften die Adapterbuchse sich an die Vollwelle 1 und die Hohlwelle 3 anlegt.

Bei der Montage wird zuerst die Adapterbuchse 11 auf die Vollwelle 1 vormontiert. Die Vollwelle 1 wird dann zusammen mit der Adapterbuchse 11 in die Hohlwelle 3 eingeführt. Somit zentriert dann die Adapterbuchse 11 ab einer gewissen Einführtiefe sich und somit insbesondere auch die Vollwelle 1. Das Einführen wird in axialer Richtung beendet bei Kontakt der Adapterbuchse 11 mit dem als Anschlag 22 ausgebildeten Bund. Danach wird bei der Schrumpfscheibe mittels Anziehen der Schrauben 8 eine Abstützscheibe 6 und eine Anziehscheibe 7 aufeinander zu bewegt, wobei die Abstützscheibe 6 und die Anziehscheibe 7 auf einem Pressring 5 mit doppeltem Außenkonus angeordnet sind.

Der Pressring 5 sitzt mit seiner Innenseite, also seinem Innenzylinder auf der Hohlwelle 3 und weist einen axialen Längsschlitz auf. Somit drücken bei zunehmendem Anziehen der Schrauben 8
Abstützscheibe 6 und die Anziehscheibe 7 immer mehr auf den Pressring 5, der sich also in Umfangsrichtung zusammenzieht und sich auf die Hohlwelle 3 presst. Dieser Bereich der Hohlwelle ist insbesondere wegen des Innenkonus derart ausreichend dünnwandig und elastisch, dass die Verformung dieses Bereichs der Hohlwelle 3 ein Schrumpfen der Adapterbuchse 4 bewirkt.

In der Draufsichtzeichnung der Figur 1 ist an einem Schraubloch 19 die zugehörige Schraube 8 herausgenommen gezeichnet.

Bei der Demontage werden die Schrauben 8 aus den Schraublöchern 19 herausgeschraubt und in andere Schraublöcher 20 eingeschraubt, die derart am Umfang der Anziehscheibe 7 versetzt angeordnet sind, dass sich keine entsprechend zugehörigen Schraublöcher in der Abstützscheibe 6 befinden. Somit stützen die Schrauben 8 sich an der Abstützscheibe 6 zum Herausziehen der Anziehscheibe 7 ab. Eine Stützscheibe 10 und ein Sicherungsring 9 legen die axiale Position der Abstützscheibe 6 fest. Die Adapterbuchse 4 weist an ihrem dickwandigeren Ende einen Kragen mit einem derartigen äußeren Durchmesser auf, dass die Anziehscheibe 7 die Adapterbuchse 4 herauszieht. Somit sind die gleichen Schrauben für das Anziehen und das Abziehen verwendbar.

Die Anziehscheibe 7 ist innerhalb des axialen Bereiches der Hohlwelle 3 angeordnet.

Mittels der Erfindung sind verschiedene Vollwellen bei gleicher Hohlwelle bei der erfindungsgemäßen Spannvorrichtung verwendbar, da auch bei grobtoleriertem Nenndurchmesser der Vollwelle die Schrumpfscheibe die Hohlwelle über die Adapterbuchse 4 mit der Vollwelle verbindet. Der zugehörige Toleranzbereich hängt zumindest von der Elastizität der Hohlwelle 3 und der Konusschräge ab.

Die Erfindung bietet also wesentlichen Vorteile darin, dass bei verschiedenen Nenndurchmessern der Vollwelle 1 trotzdem dieselbe Hohlwelle 3 verwendet werden kann. Auch alle anderen Teile sind dabei wiederverwendbar mit Ausnahme der Adapterbuchsen 4,11.

Dies ist besonders vorteilhaft für einen Hersteller von Vorrichtungen mit Hohlteil, wobei der Hersteller Kunden beliefert, die Vollwellen mit Nenndurchmessern nach metrischem oder nach Zoll-System verwenden. Denn mit der vorliegenden Erfindung ist nach Austausch der beispielweise metrischen Adapterbuchsen gegen Adapterbuchsen mit einem in Zoll bemaßten Innendurchmesser eine vollständige Kompatibilität und Verwendung gegeben.

Außerdem sind grobtolerierte Vollwellen 1, also Vollwellen mit einem Nenndurchmesser aus einem großen Toleranzband, verwendbar, weil durch kleine axiale Verschiebungen der Adapterbuchsen 4, 11 und durch die hohe Elastizität längs des Umfangs der Adapterbuchsen 4,11 infolge der axialen Längsschlitze 21 solche Durchmesser-Variationen aufgenommen werden.

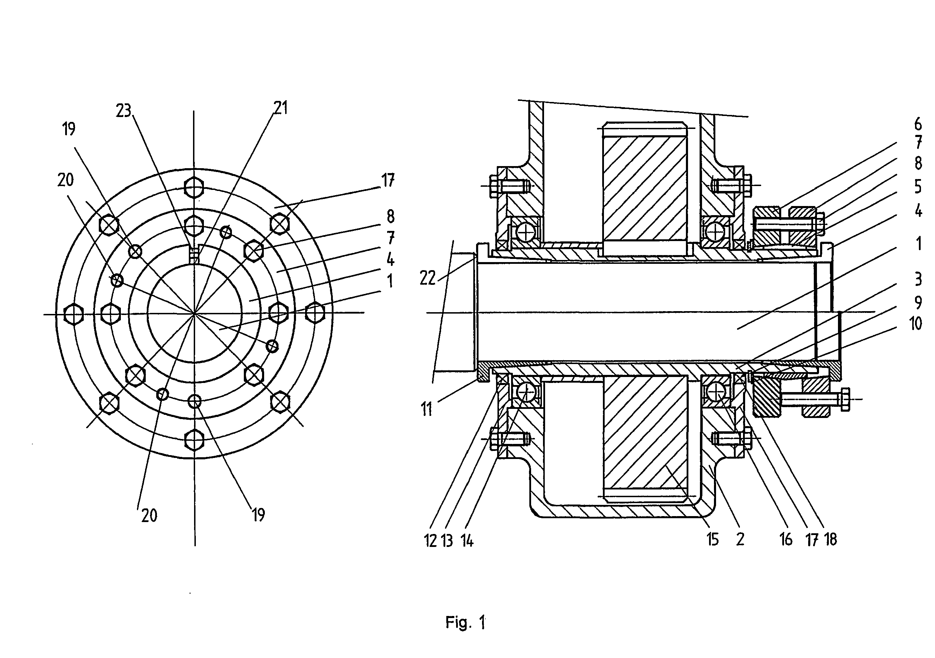

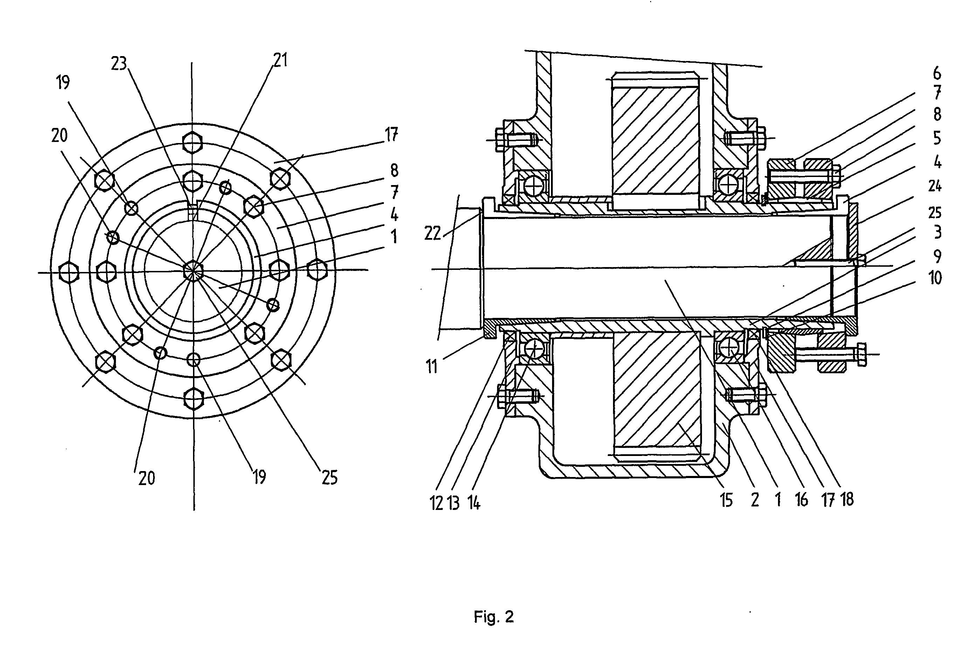

In der Figur 2 ist ein anderes erfindungsgemäßes Ausführungsbeispiel gezeigt. Dabei bewirkt das Anziehen der Anziehschraube 25 ein axiales Anlegen und Zentrieren der Teile; die Stützscheibe 24 drückt nämlich beim Anziehen gegen die Adapterbuchse 4, welche wiederum auf die Hohlwelle 3 gedrückt wird. Somit wird die Hohlwelle 3 an Adapterbuchse 11 und Adapterbuchse 11 an den Bund 22 der Vollwelle 1 gedrückt.

Bei weiteren erfindungsgemäßen Ausführungsbeispielen kann die Adapterbuchse 4 mit einem Konuswinkel, der zur Selbsthemmung oder Nicht-Selbsthemmung der Adapterbuchse 4 führt, ausgeführt sein.

Die Eigenschaft der Selbsthemmung oder Nicht-Selbsthemmung wird mittels Wahl des Konuswinkel des Außenkonus der Adapterbuchse 4, der Wahl der Materialien der sich berührenden Teile, wie Adapterbuchse 4, Hohlwelle 1 oder dergleichen, und mittels der Wahl des Schmiermittels festgelegt.

Bei einem weiteren, solchermaßen nicht selbsthemmenden Ausführungsbeispiel bewirkt die Anziehschraube 25 mit der Stützscheibe 24 zusammen eine Vorspannung, die über das Anziehmoment definierbar ist, und zusätzlich eine axiale mechanische Verriegelung.

Bei anderen erfindungsgemäßen Ausführungsbeispielen wird statt der Stützscheibe 24 und der Anziehschraube 25 mindestens ein Sicherungsring eingesetzt, der in eine Nut der Vollwelle eingesenkt ist. Außerdem sind - abhängig von der jeweiligen speziellen Konstruktion - auch Passscheiben zusätzlich verwendbar. Somit ist vorteiligerweise eine kostengünstige Herstellung der mechanischen Verriegelung mit Standard-Bauteilen erreichbar. Sogar eine Vorspannung ist bei geeigneter Auslegung vom Fachmann im Rahmen der Erfindung ausführbar.

Die Erfindung bezieht sich auch auf Vorrichtungen, die keine Adapterbuchse 11 und zugehörigen Anschlag 22 aufweisen.

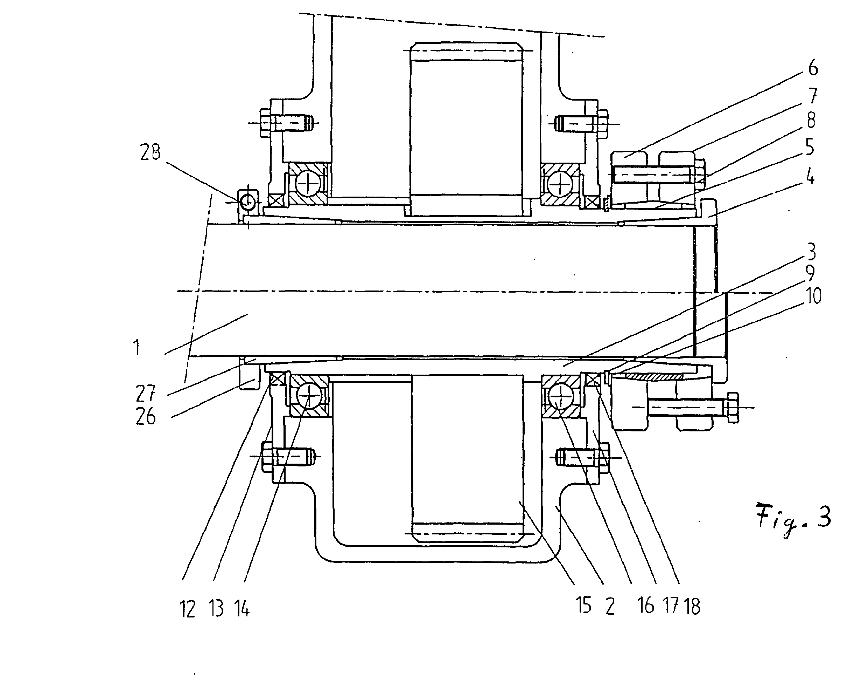

In der Figur 3 ist ein anderes erfindungsgemäßes Ausführungsbeispiel gezeigt, das an dem der Schrumpfscheibe zugewandten Ende der Figur 1 gleicht. Abweichend von Figur 1 ist die Vollwelle 1 jedoch ohne Anschlag 22 ausgeführt. Die Vollwelle 1 ist also besonders einfach herstellbar. Zur axialen Fixierung der Adapterbuchse 27 dient der Klemmring 26. Da der Klemmring zur axialen Fixierung dient und keinen wesentlichen Beitrag zur Drehmoment- und/oder Kraftübertragung leisten muss, ist er kompakt ausführbar und benötigt nur wenig Baulänge, insbesondere axiale. Außerdem ist als Klemmring ein kostengünstiges Standardteil verwendbar. Die Verbindung zu Drehmoment- und/oder Kraftübertragung ist wie auch bei den Ausführungsbeispielen nach Figur 1 und 2 mittels der Schrumpfscheibe und der dort zugehörigen Adapterbuchse vorgesehen.

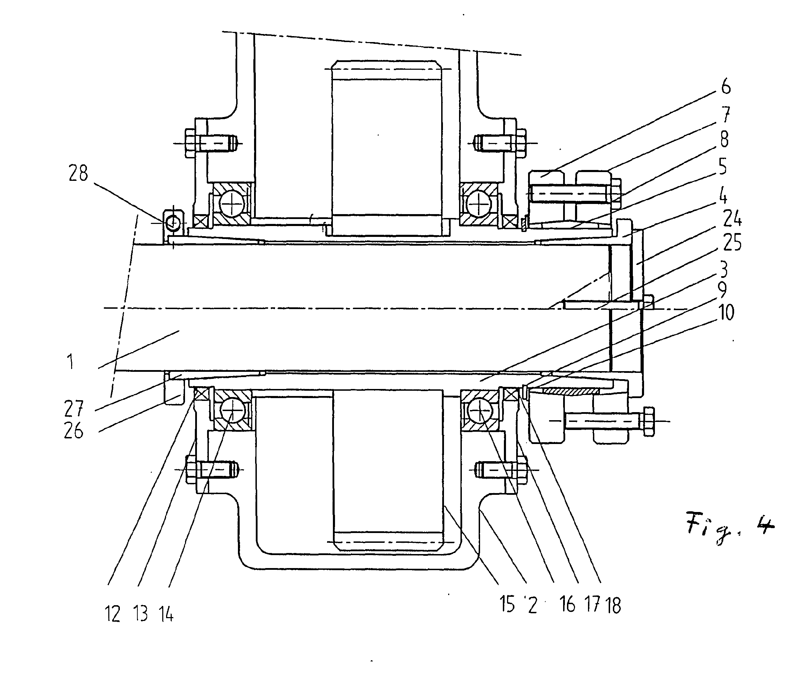

In der Figur 4 ist ein anderes erfindungsgemäßes Ausführungsbeispiel gezeigt, das an dem der Schrumpfscheibe zugewandten Ende der Figur 2 gleicht. Abweichend von Figur 2 ist die Vollwelle 1 jedoch ohne Anschlag 22 ausgeführt. Zur axialen Fixierung der Adapterbuchse 27 dient wiederum der Klemmring 26, wobei die Vorteile den vorgenannten Vorteilen entsprechen.

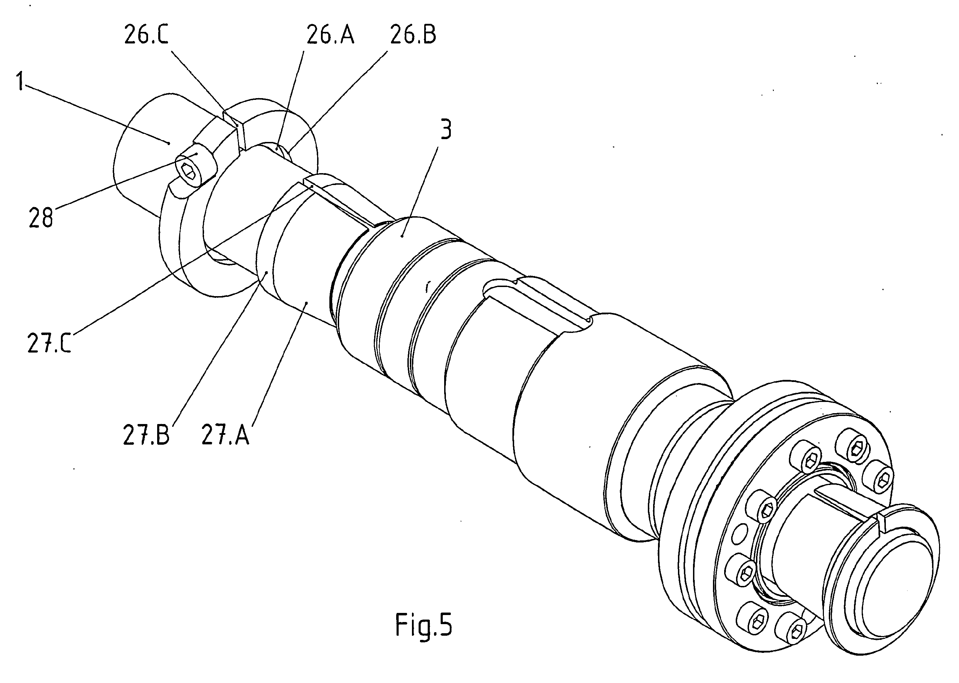

In der Figur 5 ist das Ausführungsbeispiel nach Figur 3 in räumlicher Darstellung skizziert. Dabei sind die Teile in einer Explosionsdarstellung skizziert, also auseinandergeschoben einzeln sichtbar. Der Klemmring 26 wird mittels Anziehen der Anzugschraube 28 mit der Adapterbuchse 27 verbunden, wobei die Distanz am Umfang beim axialen Längsschlitz 26.C und somit auch der Innendurchmesser der Zentrierpressbohrung 26.B vermindert wird. Der Klemmring 26 berührt mit seiner Zentrierpressbohrung 26.B den Außenzentriersitz 27.B der Adapterbuchse 27, die mit ihrem Zentrierkonus 27.A mit der Hohlwelle 3 an deren Innenkonus verbindbar ist. Der Schlitz 27.C der Adapterbuchse 27 ermöglicht ein gleichmäßiges Zusammenziehen der Adapterbuchse 27 am Umfang. Die Kontaktfläche 26.A bildet den axialen Anschlag für die Adapterbuchse 27. Dabei ist zu beachten, dass der Klemmring ein entsprechendes Profil aufweist, das in Figur 3 und Figur 4 in Querschnütsdarstellung dargestellt ist. Das Profil weist eine derartige Stufe auf zur Bildung des genannten Anschlages für die Adapterbuchse 3, dass die Adapterbuchse axial nur teilweise in den Klemmring hineinragen kann.

## Patentansprüche

1. Spannvorrichtung zur Befestigung einer Hohlwelle (3) oder eines Hohlteiles auf einer Vollwelle (1); bei der
die Hohlwelle (3) oder das Hohlteil an zumindest einem ihrer Enden einen Innenkonus zur Aufnahme einer Adapterbuchse (4, 11, 27) aufweist, die einen entsprechenden Außenkonus aufweist und auf der Vollwelle (1) liegt,
**dadurch gekennzeichnet, dass**
eine Schrumpfscheibe, umfassend mindestens einen Pressring (5), eine Schrumpfkraft mittels des mindestens einen Pressrings (5) auf die Hohlwelle (3) oder das Hohlteil ausübt,
dass der Pressring (5) einen axialen Längsschlitz (23) aufweist,
und dass die Hohlwelle (3) oder das Hohlteil an beiden Enden jeweils einen Innenkonus zur Aufnahme einer jeweiligen Adapterbuchse (4, 27) aufweist, die einen entsprechenden Außenkonus aufweist und auf der Vollwelle (1) liegt,
wobei an dem anderen Ende ein Klemmring (26) zur axialen Fixierung der entsprechenden Adapterbuchse (27) vorgesehen ist.

2. Spannvorrichtung nach mindestens einem der vorangegangenen Ansprüche,
**dadurch gekennzeichnet, dass**
die Schrumpfkraft derartig wirkt, dass der Innenkonus und der Außenkonus aufeinander geschrumpft werden.

3. Spannvorrichtung nach mindestens einem der vorangegangenen Ansprüche,
**dadurch gekennzeichnet, dass**
die Schrumpfkraft mittels des mindestens einen Pressrings (5) auf die Hohlwelle (3) oder das Hohlteil wirkt.

4. Spannvorrichtung nach mindestens einem der vorangegangenen Ansprüche,
**dadurch gekennzeichnet, dass**
die Adapterbuchse (4, 11, 27) einen axialen Längsschlitz (21) aufweist,

5. Spannvorrichtung nach mindestens einem der vorangegangenen Ansprüche,
**dadurch gekennzeichnet, dass**
die Hohlwelle (3) keinen Schlitz aufweist.

6. Spannvorrichtung nach mindestens einem der vorangegangenen Ansprüche,
**dadurch gekennzeichnet, dass**
der Innenkonus der Hohiwelle (3) durch Schleifen bearbeitet ist.

7. Spannvorrichtung nach mindestens einem der vorangegangenen Ansprüche,
**dadurch gekennzeichnet, dass**
die Schrumpfscheibe mindestens einen Pressring (5), mindestens eine Abstützscheibe (6), mindestens eine Anziehscheibe (7) und mindestens Schrauben (8) umfasst.

8. Spannvorrichtung nach mindestens einem der vorangegangenen Ansprüche,
**dadurch gekennzeichnet, dass** sich
die Schrumpfscheibe und/oder die Abstützscheibe (6) und/oder die Anziehscheibe (7) axial innerhalb der Hohlwelle (3) befindet.

9. Spannvorrichtung nach mindestens einem der vorangegangenen Ansprüche,
**dadurch gekennzeichnet, dass**
die Adapterbuchse (4) einen derart geformten Kragen aufweist, dass bei Demontage ein Herausziehen mittels der Abziehscheibe (7) ausführbar ist.

10. Spannvorrichtung nach mindestens einem der vorangegangenen Ansprüche,
**dadurch gekennzeichnet, dass**
die Abziehscheibe (7) Schraublöcher (19) für die Schrauben (8) beim Anziehen der Schrumpfscheibe, insbesondere bei Montage, aufweist und weitere Schraublöcher (20) aufweist für die Demontage, das Lösen der Schrumpfscheibe und/oder das Abziehen mindestens der Adapterbuchse (4, 11, 27).

11. Spannvorrichtung nach mindestens einem der vorangegangenen Ansprüche,
**dadurch gekennzeichnet, dass**
die Vollwelle einen Anschlag (22) zur Begrenzung der axialen Position einer weiteren Adapterbuchse (11) aufweist

12. Spannvorrichtung nach mindestens einem der vorangegangenen Ansprüche,
**dadurch gekennzeichnet, dass**
die weitere Adapterbuchse (11) einen Außenkonus und/oder einen Kragen aufweist.

13. Spannvorrichtung nach mindestens einem der vorangegangenen Ansprüche,
**dadurch gekennzeichnet, dass**
die Adapterbuchse (4, 11, 27) derart ausgeführt ist, dass sie **selbsthemmend** zur Vollwelle (1) und/oder Hohlwelle (3) ist.

14. Spannvorrichtung nach mindestens einem der vorangegangenen Ansprüche,
**dadurch gekennzeichnet, dass**
die Adapterbuchse (4, 11, 27) einen Konuswinkel derart aufweist, dass sie selbsthemmend zur Vollwelle (1) und/oder Hohlwelle (3) ist.

15. Spannvorrichtung nach mindestens einem der vorangegangenen Ansprüche,
**dadurch gekennzeichnet, dass**
der Außenkonus der Adapterbuchse (4, 11, 27) und/oder der Innenkonus der Hohlwelle (3) oder des Hohlteils einen Konuswinkel derart aufweist, dass sie selbsthemmend zur Vollwelle (1) und/oder Hohlwelle (3) ist.

16. Spannvorrichtung nach mindestens einem der Ansprüche 1 bis 13,
**dadurch gekennzeichnet, dass**
die Adapterbuchse (4, 11, 27) derart ausgeführt ist, dass sie **nicht selbsthemmend** zur Vollwelle (1) und/oder Hohlwelle (3) ist.

17. Spannvorrichtung nach mindestens einem der Ansprüche 1 bis 13 oder 17,
**dadurch gekennzeichnet, dass**
die Adapterbuchse (4, 11, 27) einen Konuswinkel derart aufweist, dass sie nicht selbsthemmend zur Vollwelle (1) und/oder Hohlwelle (3) ist.

18. Spannvorrichtung nach mindestens einem der Ansprüche 1 bis 13, 17 oder 18,
**dadurch gekennzeichnet, dass**
der Außenkonus der Adapterbuchse (4, 11, 27) und/oder der Innenkonus der Hohlwelle (3) oder des Hohlteils einen Konuswinkel derart aufweist, dass sie nicht selbsthemmend zur Vollwelle (1) und/oder Hohlwelle (3) ist.

19. Spannvorrichtung nach mindestens einem der vorangegangenen Ansprüche,
**dadurch gekennzeichnet, dass**
eine weitere, mindestens eine Einzelkomponente umfassende Komponente auf die Vollwelle (1) derart wirkt und mit der Vollwelle (1) derart verbindbar ist, dass die Vollwelle (1) zur Hohlwelle (3) oder zum Hohlteil axial positioniert, verriegelt und/oder vorgespannt wird.

20. Spannvorrichtung nach mindestens einem der vorangegangenen Ansprüche,
**dadurch gekennzeichnet, dass**
die Komponente eine axiale mechanische Verriegelung bewirkt, mindestens wenn die Adapterbuchse (4, 11, 27) nicht selbsthemmend ausgeführt ist und/oder der Konuswinkel des Außenkonus der Adapterbuchse (4, 11, 27), die Materialien und die Schmiermittel für Nicht-Selbsthemmung der Adapterbuchse (4, 11, 27) zur Hohlwelle (3) oder zum Hohlteil ausgeführt ist.

21. Spannvorrichtung nach mindestens einem der vorangegangenen Ansprüche,
**dadurch gekennzeichnet, dass**
die Komponente die Einzelkomponenten Anziehschraube (25) und Stützscheibe (24) umfasst und/oder an einem Ende der Hohlwelle (3) oder des Hohlteils angebracht ist.

22. Spannvorrichtung nach mindestens einem der vorangegangenen Ansprüche,
**dadurch gekennzeichnet, dass**
die Komponente als Einzelkomponente mindestens einen Sicherungsring umfasst, der in eine Nut der Vollwelle eingesenkt ist.

23. Spannvorrichtung nach mindestens einem der vorangegangenen Ansprüche,
**dadurch gekennzeichnet, dass**
die Komponente als Einzelkomponente mindestens auch eine Passscheibe umfasst.

24. Spannvorrichtung nach Anspruch 20,
**dadurch gekennzeichnet, dass**
das Verbinden ein Anziehen, insbesondere der Anziehschraube (25), ist.

## Claims

1. A clamping device for securing a hollow shaft (3) or a hollow part on a solid shaft (1), with which at least one of the ends of the hollow shaft (3) or the hollow part has an inside taper to receive an adaptor bushing (4, 11, 27) which has a corresponding outside taper and lies on the solid shaft (1), **characterised in that** a shrink disc, comprising at least one pressure ring (5), exerts a shrinkage force upon the hollow shaft (3) or the hollow part by means of the at least one pressure ring (5), **in that** the pressure ring (5) has an axial longitudinal slot (23), and **in that** both ends of the hollow shaft (3) or the hollow part each have an inside taper to receive a respective adaptor bushing (4, 27) which has a corresponding outside taper and lies on the solid shaft (1), wherein a locking ring (26) is provided at the other end to fix axially the corresponding adaptor bushing (27).

2. A clamping device according to at least one of the preceding claims, **characterised in that** the shrinkage force acts in such a manner that the inside taper and the outside taper are shrink-fitted onto one another.

3. A clamping device according to at least one of the preceding claims, **characterised in that** the shrinkage force acts upon the hollow shaft (3) or the hollow part by means of the at least one pressure ring (5).

4. A clamping device according to at least one of the preceding claims, **characterised in that** the adaptor bushing (4, 11, 27) has an axial longitudinal slot (21).

5. A clamping device according to at least one of the preceding claims, **characterised in that** the hollow shaft (3) does not have a slot.

6. A clamping device according to at least one of the preceding claims, **characterised in that** the inside taper of the hollow shaft (3) is processed by grinding.

7. A clamping device according to at least one of the preceding claims, **characterised in that** the shrink disc comprises at least one pressure ring (5), at least one support disc (6), at least one tightening disc (7) and at least screws (8).

8. A clamping device according to at least one of the preceding claims, **characterised in that** the shrink disc and/or the support disc (6) and/or the tightening disc (7) are located axially within the hollow shaft (3).

9. A clamping device according to at least one of the preceding claims, **characterised in that** the adaptor bushing (4) has a collar formed in such a manner that withdrawal by means of the drawing-off disc (7) can be carried out upon disassembly.

10. A clamping device according to at least one of the preceding claims, **characterised in that** the drawing-off disc (7) has screw holes (19) for the screws (8) upon tightening of the shrink disc, in particular during assembly, and has further screw holes (20) for disassembly, loosening of the shrink disc and/or withdrawal of at least the adaptor bushing (4, 11, 27).

11. A clamping device according to at least one of the preceding claims, **characterised in that** the solid shaft has a stop (22) to limit the axial position of another adaptor bushing (11).

12. A clamping device according to at least one of the preceding claims, **characterised in that** the additional adaptor bushing (11) has an outside taper and/or a collar.

13. A clamping device according to at least one of the preceding claims, **characterised in that** the adaptor bushing (4, 11, 27) is such that it is self-locking with respect to the solid shaft (1) and/or hollow shaft (3).

14. A clamping device according to at least one of the preceding claims, **characterised in that** the adaptor bushing (4, 11, 27) has a cone angle in such a manner that it is self-locking with respect to the solid shaft (1) and/or hollow shaft (3).

15. A clamping device according to at least one of the preceding claims, **characterised in that** the outside taper of the adaptor bushing (4, 11, 27) and/or the inside taper of the hollow shaft (3) or the hollow part has/have a cone angle such that the adaptor bushing is self-locking with respect to the solid shaft (1) and/or hollow shaft (3).

16. A clamping device according to at least one of claims 1 to 13, **characterised in that** the adaptor bushing (4, 11, 27) is such that it is not self-locking with respect to the solid shaft (1) and/or hollow shaft (3).

17. A clamping device according to at least one of claims 1 to 13 or 17, **characterised in that** the adaptor bushing (4, 11, 27) has a cone angle such that it is not self-locking with respect to the solid shaft (1) and/or hollow shaft (3).

18. A clamping device according to at least one of claims 1 to 13, 17 or 18, **characterised in that** the outside taper of the adaptor bushing (4, 11, 27) and/or the inside taper of the hollow shaft (3) or the hollow part has a cone angle such that it is not self-locking with respect to the solid shaft (1) and/or hollow shaft (3).

19. A clamping device according to at least one of the preceding claims, **characterised in that** another component, comprising at least one individual component, acts upon the solid shaft (1) in such a manner and is connectable to the solid shaft (1) in such a manner that the solid shaft (1) is positioned axially, locked and/or pretensioned with respect to the hollow shaft (3) or to the hollow part.

20. A clamping device according to at least one of the preceding claims, **characterised in that** the component effects axial mechanical locking, at least when the adaptor bushing (4, 11, 27) is not self-locking in design and/or the cone angle of the outside taper of the adaptor bushing (4, 11, 27), the materials and the lubricant are designed for non-self-locking of the adaptor bushing (4, 11, 27) with respect to the hollow shaft (3) or to the hollow part.

21. A clamping device according to at least one of the preceding claims, **characterised in that** the component comprises the individual components of tightening screw (25) and support disc (24) and/or is attached to one end of the hollow shaft (3) or hollow part.

22. A clamping device according to at least one of the preceding claims, **characterised in that** the component comprises at least one retaining ring as an individual component, which retaining ring is sunk in a groove in the solid shaft.

23. A clamping device according to at least one of the preceding claims, **characterised in that** the component also comprises at least one locating disc as an individual component.

24. A clamping device according to claim 20, **characterised in that** the connection is a tightening, in particular of the tightening screw (25).

## Revendications

1. Dispositif de serrage pour la fixation, sur un arbre massif (1), d'un arbre creux (3) ou d'une pièce creuse, dans lequel
ledit arbre creux (3) ou ladite pièce creuse présente, à au moins l'une de ses extrémités, un cône intérieur conçu pour recevoir une douille d'adaptation (4, 11, 27) munie d'un cône extérieur correspondant et située sur l'arbre massif (1),
**caractérisé par le fait**
**qu'**un disque de resserrement, englobant au moins une bague de pression (5), applique une force de resserrement à l'arbre creux (3) ou à la pièce creuse, au moyen de ladite bague de pression (5) prévue au minimum,
**que** ladite bague de pression (5) comporte une fente longitudinale axiale (23),
et **que** l'arbre creux (3) ou la pièce creuse est respectivement pourvu(e), aux deux extrémités, d'un cône intérieur conçu pour recevoir une douille respective d'adaptation (4, 27) qui est munie d'un cône extérieur correspondant, et est située sur l'arbre massif (1),
une bague de coincement (26) étant prévue, à l'autre extrémité, pour le verrouillage axial à demeure de la douille d'adaptation (27) correspondante.

2. Dispositif de serrage selon au moins l'une des revendications précédentes,
**caractérisé par le fait que**
la force de resserrement agit de façon telle que le cône intérieur et le cône extérieur soient resserrés l'un sur l'autre.

3. Dispositif de serrage selon au moins l'une des revendications précédentes,
**caractérisé par le fait que**
la force de resserrement agit, sur l'arbre creux (3) ou sur la pièce creuse, au moyen de la bague de pression (5) prévue au minimum.

4. Dispositif de serrage selon au moins l'une des revendications précédentes,
**caractérisé par le fait que**
la douille d'adaptation (4, 11, 27) comporte une fente longitudinale axiale (21).

5. Dispositif de serrage selon au moins l'une des revendications précédentes,
**caractérisé par le fait que**
l'arbre creux (3) ne comporte aucune fente.

6. Dispositif de serrage selon au moins l'une des revendications précédentes,
**caractérisé par le fait que**
le cône intérieur de l'arbre creux (3) est usiné par meulage.

7. Dispositif de serrage selon au moins l'une des revendications précédentes,
**caractérisé par le fait que**
le disque de resserrement englobe au moins une bague de pression (5), au moins un disque d'appui (6), au moins un disque d'ablocage (7) et au moins des vis (8).

8. Dispositif de serrage selon au moins l'une des revendications précédentes,
**caractérisé par le fait que**
le disque de resserrement et/ou le disque d'appui (6) et/ou le disque d'ablocage (7) se trouve(nt) axialement à l'intérieur de l'arbre creux (3).

9. Dispositif de serrage selon au moins l'une des revendications précédentes,
**caractérisé par le fait que**
la douille d'adaptation (4) offre une collerette configurée de telle sorte qu'un déboîtement puisse être effectué, lors d'un démontage, au moyen du disque de déboîtement (7).

10. Dispositif de serrage selon au moins l'une des revendications précédentes,
**caractérisé par le fait que**
le disque de déboîtement (7) comprend des trous de vissage (19) destinés aux vis (8) lors de l'ablocage du disque de resserrement, en particulier au stade du montage, et d'autres trous de vissage (20) affectés au démontage, à la dépose dudit disque de resserrement et/ou au déboîtement d'au moins la douille d'adaptation (4, 11, 27).

11. Dispositif de serrage selon au moins l'une des revendications précédentes,
**caractérisé par le fait que**
l'arbre massif est muni d'une butée (22) assignée à la limitation de la position axiale d'une douille supplémentaire d'adaptation (11).

12. Dispositif de serrage selon au moins l'une des revendications précédentes,
**caractérisé par le fait que**
la douille supplémentaire d'adaptation (11) présente un cône extérieur et/ou une collerette.

13. Dispositif de serrage selon au moins l'une des revendications précédentes,
**caractérisé par le fait que**
la douille d'adaptation (4, 11, 27) est réalisée pour exercer un effet d'autoblocage vis-à-vis de l'arbre massif (1) et/ou de l'arbre creux (3).

14. Dispositif de serrage selon au moins l'une des revendications précédentes,
**caractérisé par le fait que**
la douille d'adaptation (4, 11, 27) offre un angle de conicité tel qu'elle exerce un effet d'autoblocage vis-à-vis de l'arbre massif (1) et/ou de l'arbre creux (3).

15. Dispositif de serrage selon au moins l'une des revendications précédentes,
**caractérisé par le fait que**
le cône extérieur de la douille d'adaptation (4, 11, 27), et/ou le cône intérieur de l'arbre creux (3) ou de la pièce creuse, offre(nt) un angle de conicité tel qu'il(s) exerce(nt) un effet d'autoblocage vis-à-vis de l'arbre massif (1) et/ou dudit arbre creux (3).

16. Dispositif de serrage selon au moins l'une des revendications 1 à 13,
**caractérisé par le fait que**
la douille d'adaptation (4, 11, 27) est réalisée pour n'exercer aucun effet d'autoblocage vis-à-vis de l'arbre massif (1) et/ou de l'arbre creux (3).

17. Dispositif de serrage selon au moins l'une des revendications 1 à 13 ou 17,
**caractérisé par le fait que**
la douille d'adaptation (4, 11, 27) offre un angle de conicité tel qu'elle n'exerce aucun effet d'autoblocage vis-à-vis de l'arbre massif (1) et/ou de l'arbre creux (3).

18. Dispositif de serrage selon au moins l'une des revendications 1 à 13, 17 ou 18,
**caractérisé par le fait que**
le cône extérieur de la douille d'adaptation (4, 11, 27), et/ou le cône intérieur de l'arbre creux (3) ou de la pièce creuse, offre(nt) un angle de conicité tel qu'il(s) n'exerce(nt) aucun effet d'autoblocage vis-à-vis de l'arbre massif (1) et/ou dudit arbre creux (3).

19. Dispositif de serrage selon au moins l'une des revendications précédentes,
**caractérisé par le fait**
**qu'**une pièce structurelle supplémentaire, englobant au moins un élément constitutif individuel, agit sur l'arbre massif (1) ou peut être reliée audit arbre massif (1), de telle sorte que ledit arbre massif (1) soit positionné axialement, verrouillé et/ou précontraint vis-à-vis de l'arbre creux (3) ou de la pièce creuse.

20. Dispositif de serrage selon au moins l'une des revendications précédentes,
**caractérisé par le fait que**
la pièce structurelle provoque un verrouillage mécanique axial au moins lorsque la douille d'adaptation (4, 11, 27) est réalisée pour n'exercer aucun effet d'autoblocage, et/ou l'angle de conicité du cône extérieur de ladite douille d'adaptation (4, 11, 27), les matériaux et les agents lubrifiants sont conçus pour que ladite douille d'adaptation (4, 11, 27) n'exerce aucun effet d'autoblocage vis-à-vis de l'arbre creux (3) ou de la pièce creuse.

21. Dispositif de serrage selon au moins l'une des revendications précédentes,
**caractérisé par le fait que**
la pièce structurelle englobe les éléments constitutifs individuels se présentant comme une vis d'ablocage (25) et un disque d'appui (24), et/ou est implantée à une extrémité de l'arbre creux (3) ou de la pièce creuse.

22. Dispositif de serrage selon au moins l'une des revendications précédentes,
**caractérisé par le fait que**
la pièce structurelle englobe, en tant qu'élément constitutif individuel, au moins une bague d'arrêt encastrée dans une rainure de l'arbre massif.

23. Dispositif de serrage selon au moins l'une des revendications précédentes,
**caractérisé par le fait que**
la pièce structurelle englobe également, en tant qu'élément constitutif individuel, au moins un disque d'ajustement.

24. Dispositif de serrage selon la revendication 20,
**caractérisé par le fait que**
la liaison se présente comme un ablocage ciblant, en particulier, la vis d'ablocage (25).
